# EUROPEAN PATENT SPECIFICATION

(11) **EP 4 644 217 B1**
(45) Date of publication and mention of the grant of the patent: **17.06.2026**
(21) Application number: 25172231.0
(22) Date of filing: 24.04.2025
(51) Int. Cl.: B62J 1/08

(54) **TELESCOPIC SEATPOST**
TELESKOPISCHE SATTELSTÜTZE
TIGE DE SELLE TÉLESCOPIQUE

(30) Priority: 29.04.2024 TW 113116012
(43) Date of publication of application: 05.11.2025
(73) Proprietor: Giant Manufacturing Co., Ltd., Taichung City, 40763 (TW)
(72) Inventor: TSAI, Tsung-Mu, 40763 Taichung City (TW)
(74) Representative: Becker, Eberhard

(56) References cited:
- TW-U- M 653 966
- US-A1- 2024 067 289

## Description

### BACKGROUND

### Technical Field

The disclosure relates to a telescopic seatpost applied to a bicycle.

### Description of Related Art

Current telescopic seatposts applied to bicycles are roughly divided into hydraulic type and mechanical type. The hydraulic telescopic seatpost allows arbitrary adjustment of extension length and has characteristics of adjustment flexibility and damping to reduce lifting speed. However, the hydraulic telescopic seatpost has a relatively high manufacturing cost. In addition, the mechanical telescopic seatpost adopts engagement between a sliding block and steel balls to achieve positioning. The steel balls provide smooth movement during the moving process. A steel cable is used to release the engagement of the steel balls, and then a rebound mechanism drives the seatpost to push back to an initial stroke.

However, in the current mechanical telescopic seatpost, the rebound mechanism mostly adopts an elastic member for a push-back mechanism. In order to prevent the push-back speed from being too fast and directly hitting the rider's buttocks, the elastic force of the elastic member is generally adjusted to just be enough to push back the seatpost (push-back elastic force ≧ maximum frictional force of the seatpost). Therefore, the elastic coefficient of the elastic member is relatively small. Thus, when the rider sits and presses down the seatpost, due to the small supporting elastic force of the elastic member, the weight of the rider causes the seatpost to descend too quickly, which results in excessive impact on the rider's buttocks and causes discomfort, making it challenging to balance the push-back speed and the supporting elastic force.

TW M 653966 U relates to a height-adjustable telescopic bar structure and a bicycle.

### SUMMARY

The invention is set out in the appended set of claims. The following disclosure serves a better understanding of the present invention. The disclosure provides a telescopic seatpost. During a switching process between a press down and a push back, a press-down speed and a push-back speed of the telescopic seatpost may be effectively reduced, so as to avoid an external impact caused by an excessively high press-down speed as well as a collision with a user caused by an excessively high push-back speed. Therefore, a proper elastic coefficient may be set.

A telescopic seatpost of the disclosure includes a support tube, a seat tube, a connecting seat, a deceleration module, an elastic member, a first outer tube, and a second outer tube. The seat tube is slidably disposed in the support tube. The connecting seat is connected to an end of the seat tube away from the support tube. The deceleration module is connected to the support tube and sleeved on the seat tube. The elastic member is sleeved on the connecting seat and the deceleration module and spaced apart from the seat tube. A part of the elastic member presses down the deceleration module along a normal direction. The first outer tube is connected to the support tube and surrounds the support tube. The first outer tube has a mounting seat located at an end away from the connecting seat. The second outer tube is connected to the connecting seat and accommodates the seat tube. When the seat tube slides relative to the support tube along a first direction to switch to a compression mode, the connecting seat compresses the elastic member. When the seat tube slides relative to the support tube along a second direction opposite to the first direction to switch to an extension mode, the elastic member elastically recovers to push the connecting seat.

Based on the above, in the telescopic seatpost of the disclosure, the deceleration module and the elastic member are combined. When the telescopic seatpost is switched to the compression mode or the extension mode, a damping effect is provided to reduce a lifting speed.

Furthermore, during a process in which the telescopic seatpost is switched to the compression mode, the seat tube and the deceleration module interfere with each other to increase a press-down resistance, so that a descending speed of the seat tube is reduced. Compared with conventional mechanical telescopic seatposts, a riding experience of rapid falling and stalling may be improved. During a process in which the telescopic seatpost is switched to the extension mode, the seat tube and the deceleration module interfere with each other to increase a push-back resistance, so that an ascending speed of the seat tube is reduced and a collision with the user caused by an excessively high push-back speed is avoided.

### BRIEF DESCRIPTION OF THE DRAWINGS

FIG. 1A is a perspective schematic diagram of a telescopic seatpost according to an embodiment of the disclosure.
FIG. 1B is a cross-sectional schematic diagram of the telescopic seatpost of FIG. 1A.
FIG. 1C is a plan view schematic diagram of a part of multiple elements of the telescopic seatpost of FIG. 1A.
FIG. 1D is a cross-sectional schematic diagram of the telescopic seatpost of FIG. 1C switched to an extension mode.
FIG. 1E is a cross-sectional schematic diagram of the telescopic seatpost of FIG. 1C switched to a compression mode.
FIG. 2 is a force curve difference diagram of the telescopic seatpost of FIG. 1A.
FIG. 3A is a plan view schematic diagram of a telescopic seatpost according to another embodiment of the disclosure.
FIG. 3B is a cross-sectional schematic diagram of the telescopic seatpost of FIG. 3A switched to the extension mode.
FIG. 3C is a cross-sectional schematic diagram of the telescopic seatpost of FIG. 3A switched to the compression mode.
FIG. 4A is a plan view schematic diagram of a telescopic seatpost according to another embodiment of the disclosure.
FIGs. 4B to 4D are schematic diagrams of switching actions of the telescopic seatpost of FIG. 4A in the extension mode and the compression mode.
FIG. 4E is a schematic diagram of switching actions of the telescopic seatpost of FIG. 4A in the extension mode and the compression mode.
FIG. 5 is a force curve difference diagram of the telescopic seatpost of FIG. 4A.

### DESCRIPTION OF THE EMBODIMENTS

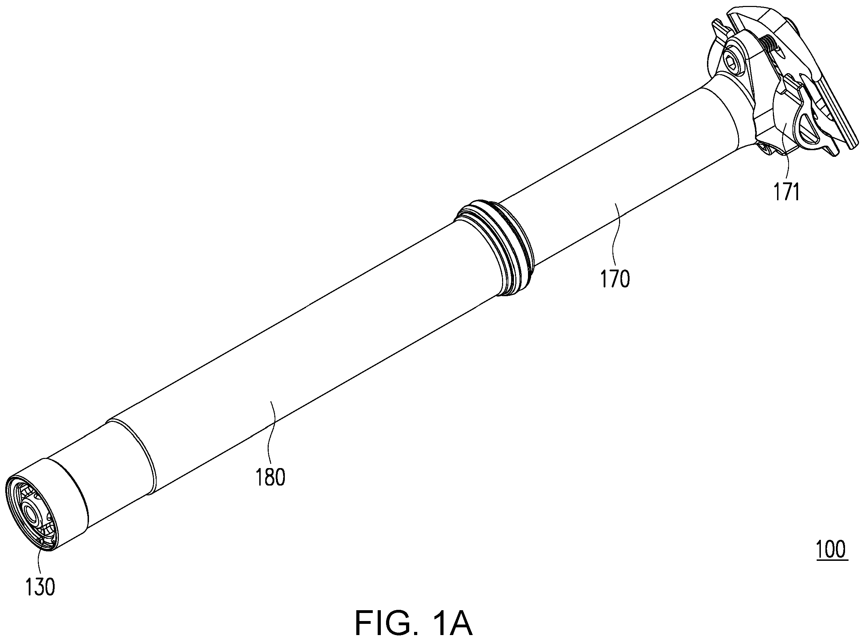

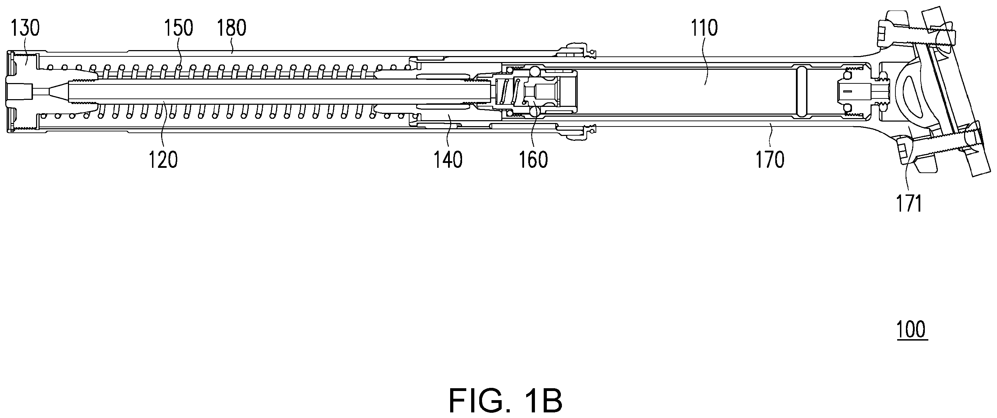

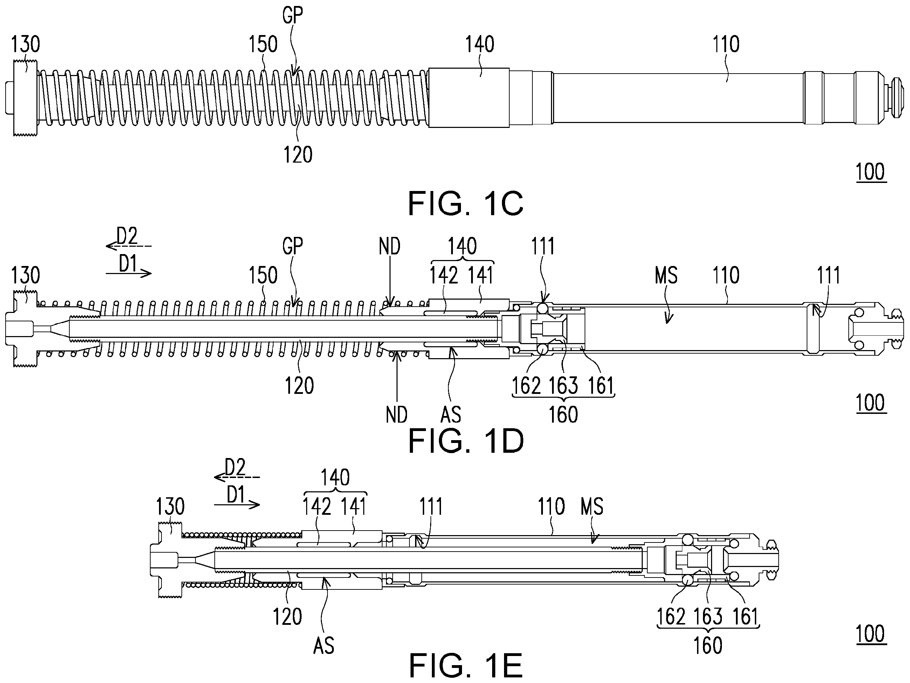

FIG. 1A is a perspective schematic diagram of a telescopic seatpost according to an embodiment of the disclosure. FIG. 1B is a cross-sectional schematic diagram of the telescopic seatpost of FIG. 1A. FIG. 1C is a plan view schematic diagram of a part of multiple elements of FIG. 1A. FIG. 1D is a cross-sectional schematic diagram of the telescopic seatpost of FIG. 1C switched to an extension mode. FIG. 1E is a cross-sectional schematic diagram of the telescopic seatpost of FIG. 1C switched to a compression mode.

Referring to FIGs. 1A and 1C, a telescopic seatpost 100 of the disclosure is applicable to a seat of a bicycle, and is configured to lift and lower the seat and adjust a seat height. In addition, the telescopic seatpost 100 of the disclosure adopts a mechanical structure, and is adapted to switch between an extension mode and a compression mode. In short, the extension mode is the longest, and the compression mode is the shortest, so as to reduce complexity of adjusting the seat.

Referring to FIGs. 1A to 1C, the telescopic seatpost 100 of the disclosure includes a support tube 110, a seat tube 120, a connecting seat 130, a deceleration module 140, an elastic member 150, a first outer tube 170, and a second outer tube 180.

The support tube 110 has a sliding space MS. The seat tube 120 is slidably disposed in the sliding space MS of the support tube 110. The connecting seat 130 is connected to an end of the seat tube 120 away from the support tube 110.

The deceleration module 140 is connected to the support tube 110 and sleeved on the seat tube 120, wherein the deceleration module 140 is in surface contact with the seat tube 120 to continuously provide a fixed frictional force to the seat tube 120. In actual application, a magnitude of the frictional force may be increased or decreased according to a change of a contact area between the deceleration module 140 and the seat tube 120, depending on needs.

The elastic member 150 is sleeved on the connecting seat 130 and the deceleration module 140, which provides a stable support for the elastic member 150 and ensures its reliable operation. The elastic member 150 is spaced apart from the seat tube 120. A part of the elastic member 150 presses down the deceleration module 140 along a normal direction ND.

The telescopic seatpost 100 includes an engaging module 160. The engaging module 160 is connected to another end of the seat tube 120 and located in the sliding space MS of the support tube 110. The engaging module 160 is adapted to be fastened with the support tube 110 to switch to the extension mode (see FIG. 1D) or the compression mode (see FIG. 1E).

The first outer tube 170 is connected to the support tube 110 and surrounds the support tube 110. The first outer tube 170 has a mounting seat 171. The mounting seat 171 is located at an end away from the connecting seat 130. The mounting seat 171 is for mounting a seat. The second outer tube 180 is connected to the connecting seat 130 and accommodates the seat tube 120. The first outer tube 170 is integrally connected to the support tube 110 by a screwing manner. The second outer tube 180 is integrally connected to the connecting seat 130 by a screwing manner.

Referring to FIGs. 1D and 1E, the support tube 110 has multiple grooves 111. A part of the grooves 111 are close to the deceleration module 140 to correspond to the extension mode. Another part of the grooves 111 are away from the deceleration module 140 to correspond to the compression mode. The engaging module 160 includes a sliding seat 161, multiple balls 162, and a top block 163. The sliding seat 161 is fixed to an end of the seat tube 120 and moves together with the seat tube 120. The balls 162 are movably disposed in multiple holes of the sliding seat 161. The top block 163 is disposed on the sliding seat 161 and abuts the balls 162 to respectively engage with the grooves 111 of the support tube 110.

In addition, the top block 163 may be moved relative to the sliding seat 161 by an external force, so as to release a limiting abutment to the balls 162.

Referring to FIGs. 1C to 1E, when the seat tube 120 slides relative to the support tube 110 along a first direction D1 to switch to the compression mode, the connecting seat 130 compresses the elastic member 150, and the connecting seat 130 drives the seat tube 120 to move relative to the deceleration module 140. Since the deceleration module 140 continuously interferes with the seat tube 120 to achieve an effect of increasing a press-down resistance, a descending speed of the seat tube 120 relative to the support tube 110 is reduced, until the balls 162 of the engaging module 160 engage with the grooves 111 of the support tube 110 corresponding to the compression mode.

Referring to FIGs. 1E to 1D, when the seat tube 120 slides relative to the support tube 110 along a second direction D2 opposite to the first direction D1 to switch to the extension mode, the elastic member 150 elastically recovers to push the connecting seat 130, and the connecting seat 130 drives the seat tube 120 to move relative to the deceleration module 140. Since the deceleration module 140 continuously interferes with the seat tube 120 to achieve an effect of increasing push-back resistance, an ascending speed of the seat tube 120 relative to the support tube 110 is reduced, until the balls 162 of the engaging module 160 engage with the grooves 111 of the support tube 110 corresponding to the extension mode.

Referring to FIGs. 1C to 1E, in detail, the deceleration module 140 has a bushing 141 and an elastic ring 142. The bushing 141 is fixed to the support tube 110 and has an accommodating space AS. The elastic ring 142 is disposed in the accommodating space AS and in surface contact with the seat tube 120. The bushing 141 completely seals the elastic ring 142 and applies a force to the elastic ring 142, so that the elastic ring 142 is compressed and continuously interferes with the seat tube 120. In addition, a part of the elastic member 150 gradually increases a force on the bushing 141 during compression to provide additional resistance, and at the time of extension, the elastic member 150 gradually reduces the force on the bushing 141 to reduce the additional resistance.

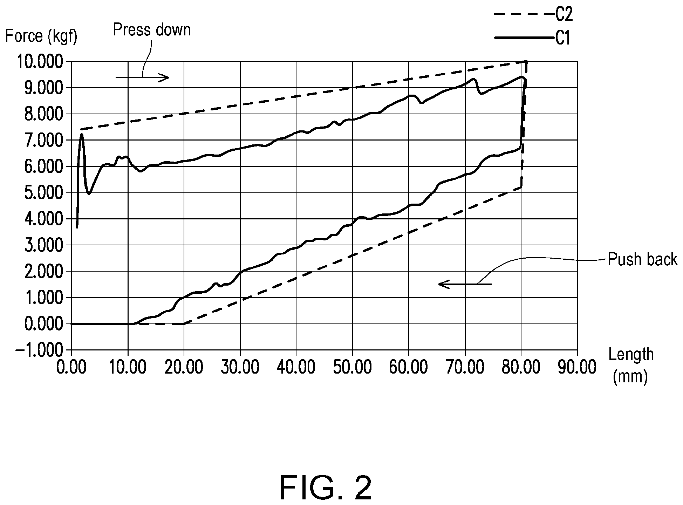

FIG. 2 is a force curve difference diagram of the telescopic seatpost of FIG. 1C.

A horizontal axis of FIG. 2 is a length, defined as an overlapping length of the seat tube 120 and the support tube 110. That is, under the extension mode, the overlapping length of the seat tube 120 and the support tube 110 is 0 (mm), and under the compression mode, the overlapping length of the seat tube 120 and the support tube 110 is 80 (mm). A vertical axis of FIG. 2 is a force, defined as a force borne by the seat tube 120 during movement (including an elastic force of the elastic member 150 and a frictional force of the elastic ring 142).

Referring to FIGs. 1D, 1E, and 2 together, a curve C1 is a force variation diagram of the telescopic seatpost 100 without the deceleration module 140. During a process in which the telescopic seatpost 100 is switched from the extension mode to the compression mode, a force acting on the seat tube 120 is 4 (kgf) to 9 (kgf). A curve C2 is a force variation diagram of the telescopic seatpost 100 with the deceleration module 140. Referring to FIGs. 1D to 1E, during a process in which the telescopic seatpost 100 is switched from the extension mode to the compression mode, multiple gaps GP of the elastic member 150 gradually taper such that an overlapping area between the elastic member 150 and the bushing 141 gradually increases, and an interference degree between the elastic ring 142 and the seat tube 120 remains unchanged, meaning that the elastic ring 142 continuously provides a frictional force to the seat tube 120. Therefore, a force acting on the seat tube 120 is 7.5 (kgf) to 10 (kgf).

In short, from a comparison between the curve C1 and the curve C2, it may be seen that during a press-down process, a force acting on the seat tube 120 is increased from 4 (kgf) to 9 (kgf) to 7 (kgf) to 10 (kgf). This indicates that a resistance during a descending process of the seat tube 120 is increased, that is, when the seat tube 120 descends, an elastic force of the elastic member 150 and a frictional force of the elastic ring 142 have to be overcome, so that a descending speed of the seat tube 120 may be reduced.

Referring to FIGs. 1D, 1E, and 2 together, the curve C1 is a force variation diagram of the telescopic seatpost 100 without the deceleration module 140. During a process in which the telescopic seatpost 100 is switched from the compression mode (see FIG. 1E) to the extension mode (see FIG. 1D), a push-back force on the seat tube 120 is 6 (kgf) to 0 (kgf). The curve C2 is a force variation diagram of the telescopic seatpost 100 with the deceleration module 140. During a process in which the telescopic seatpost 100 is switched from the compression mode (see FIG. 1E) to the extension mode (see FIG. 1D), multiple gaps GP of the elastic member 150 gradually increase such that an overlapping area between the elastic member 150 and the bushing 141 gradually decreases, and an interference degree between the elastic ring 142 and the seat tube 120 remains unchanged, meaning that the elastic ring 142 continuously provides a frictional force to the seat tube 120. Therefore, a push-back force on the seat tube 120 is 4 (kgf) to 0 (kgf).

From the comparison between the curve C1 and the curve C2, it may be seen that a force on the seat tube 120 during the push-back process is reduced from 6.5 (kgf) to 0 (kgf) to 5 (kgf) to 0 (kgf). This indicates that a resistance during an ascending process of the seat tube 120 is increased, that is, an elastic force of the elastic member 150 has to overcome a frictional force of the elastic ring 142 to push back the seat tube 120, so that an ascending speed of the seat tube 120 may be reduced.

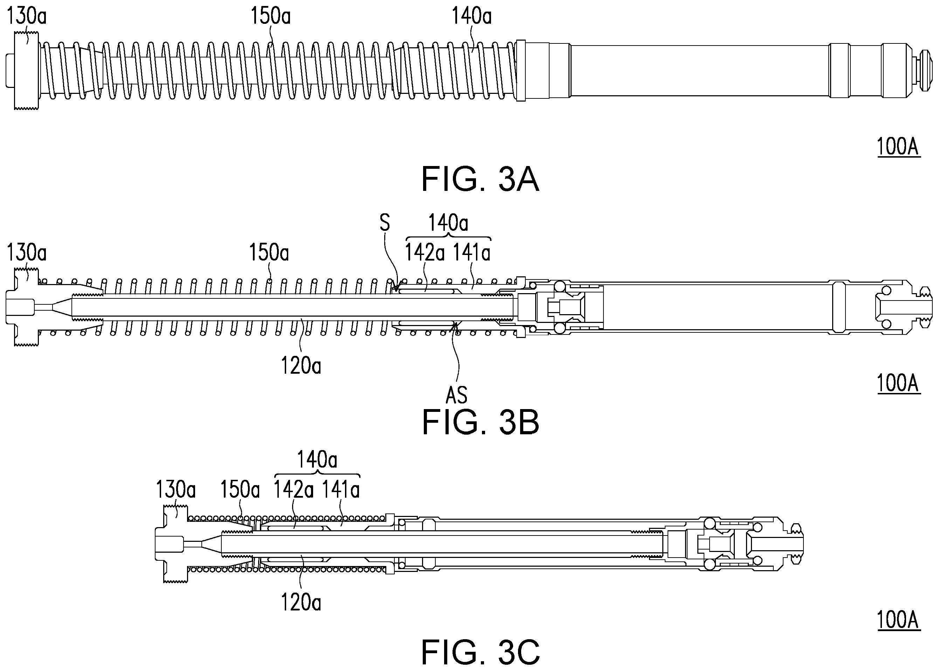

FIG. 3A is a plan view schematic diagram of a telescopic seatpost according to another embodiment of the disclosure. FIG. 3B is a cross-sectional schematic diagram of the telescopic seatpost of FIG. 3A switched to the extension mode. FIG. 3C is a cross-sectional schematic diagram of the telescopic seatpost of FIG. 3A switched to the compression mode.

Referring to FIGs. 3A to 3C, a telescopic seatpost 100A in this embodiment differs from the telescopic seatpost 100 of FIG. 1C. The difference lies in that a bushing 141a of a deceleration module 140a has an opening S on a side toward a connecting seat 130a, and the opening S communicates with an accommodating space AS. The bushing 141a partially exposes an elastic ring 142a. The elastic ring 142a is disposed in the accommodating space AS and in surface contact with a seat tube 120a. The bushing 141a applies a force to the elastic ring 142a along a normal direction ND, so that the elastic ring 142a is compressed and continuously interferes with the seat tube 120a. A part of an elastic member 150a presses down the bushing 141a.

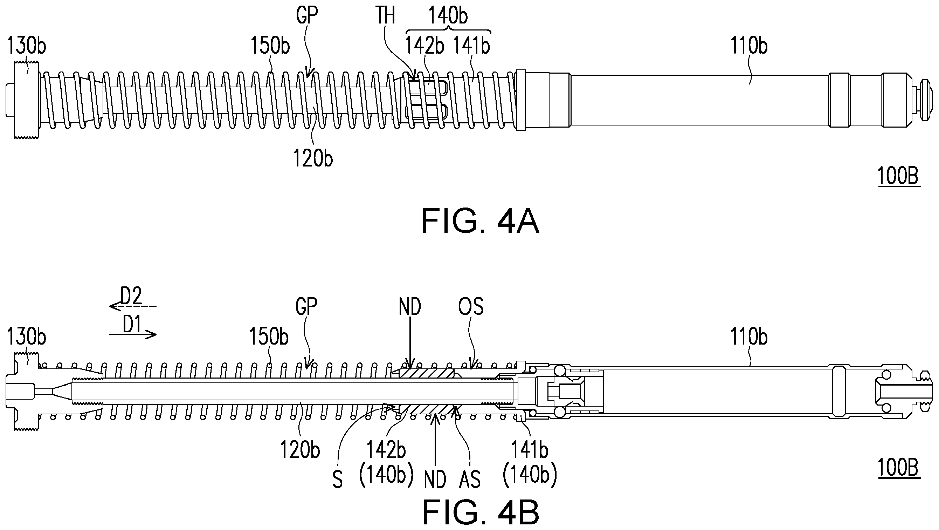

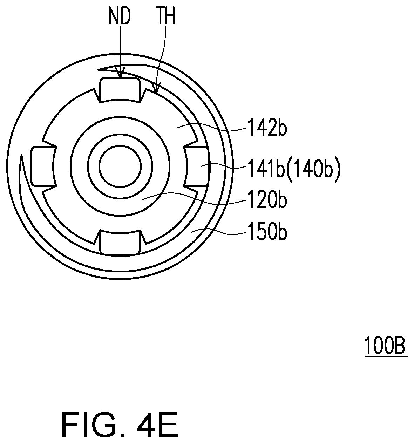

FIG. 4A is a plan view schematic diagram of a telescopic seatpost according to another embodiment of the disclosure. FIGs. 4B to 4D are schematic diagrams of switching actions of the telescopic seatpost of FIG. 4A in the extension mode and the compression mode. FIG. 4E is a schematic diagram of a switching action of the telescopic seatpost of FIG. 4A in the extension mode and the compression mode.

Referring to FIGs. 4A, 4B, and 4E, a telescopic seatpost 100B in this embodiment differs from the telescopic seatpost 100 of FIG. 1A. The difference lies in that a bushing 141b has an opening S on a side toward a connecting seat 130b and has multiple through holes TH extending along a normal direction ND. The opening S communicates with an accommodating space AS. An elastic ring 142b is disposed in the accommodating space AS and in surface contact with a seat tube 120b. A part of the elastic ring 142b is located in the through holes TH and flush with an outer surface OS of the bushing 141b. The bushing 141b applies a force to the elastic ring 142b along the normal direction ND, so that the elastic ring 142b is compressed and continuously interferes with the seat tube 120b. A part of an elastic member 150b presses down the bushing 141b and the elastic ring 142b.

Referring to FIGs. 4B to 4D, when the seat tube 120b slides relative to a support tube 110b along a first direction D1 to switch to the compression mode, the connecting seat 130b compresses the elastic member 150b, and the connecting seat 130b drives the seat tube 120b to move relative to a deceleration module 140b. Since the elastic member 150b gradually presses down an elastic ring 142b of the deceleration module 140b, a degree to which the deceleration module 140b interferes with the seat tube 120b gradually increases. Therefore, a press-down resistance of the seat tube 120b does not significantly increase until the seat tube 120b is pressed down for a period of time, so that a descending speed of the seat tube 120b relative to the support tube 110b is reduced.

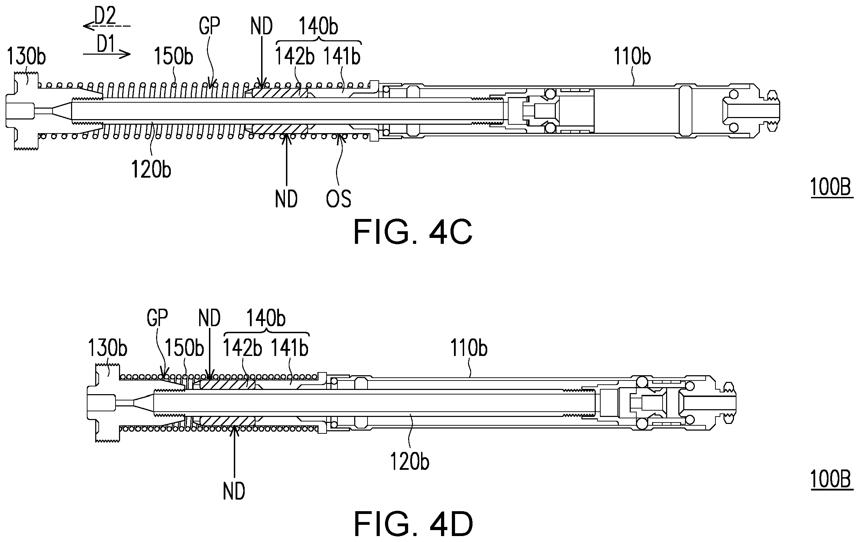

Referring to FIGs. 4D to 4B, when the seat tube 120b slides relative to the support tube 110b along a second direction D2 to switch to the extension mode, the elastic member 150b elastically recovers to push the connecting seat 130b, and the connecting seat 130b drives the seat tube 120b to move relative to the deceleration module 140b. Since the elastic member 150b gradually reduces a press-down force on the elastic ring 142b of the deceleration module 140b, a degree to which the deceleration module 140b interferes with the seat tube 120b also gradually decreases. In an initial stage of an ascent of the seat tube 120b, an effect of increasing push-back resistance is provided, so that an ascending speed of the seat tube 120b relative to the support tube 110b is reduced.

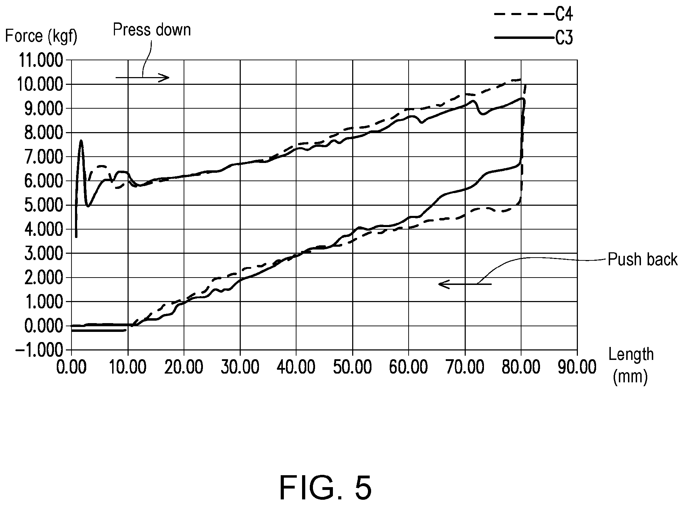

FIG. 5 is a force curve difference diagram of the telescopic seatpost of FIG. 4A.

A horizontal axis of FIG. 5 is a length, defined as an overlapping length of the seat tube 120b and the support tube 110b. That is, under the extension mode, the overlapping length of the seat tube 120b and the support tube 110b is 0 (mm), and under the compression mode, the overlapping length of the seat tube 120b and the support tube 110b is 80 (mm). A vertical axis of FIG. 5 is a force, defined as a force borne by the seat tube 120b during movement (including an elastic force of the elastic member 150b and a frictional force of the elastic ring 142b).

Referring to FIG. 5 and FIGs. 4B to 4D, a curve C3 is a force variation diagram of the telescopic seatpost 100B without the deceleration module 140b. During a process in which the telescopic seatpost 100B is switched from the extension mode (see FIG. 4B) to the compression mode (see FIG. 4D), a force acting on the seat tube 120b is 4 (kgf) to about 9 (kgf). A curve C4 is a force variation diagram of the telescopic seatpost 100B with the deceleration module 140b. Referring to FIGs. 4D to 4B, during a process in which the telescopic seatpost 100 is switched from the extension mode to the compression mode, multiple gaps GP of the elastic member 150b gradually taper, such that an overlapping area between the elastic member 150b and the bushing 141b and the elastic ring 142b gradually increases. Since an area by which the elastic member 150b directly presses down the elastic ring 142b becomes larger, an interference degree between the elastic ring 142b and the seat tube 120b gradually increases. This means that a frictional force provided by the elastic ring 142b to the seat tube 120b gradually increases along with compression of the elastic member 150b. Therefore, a force acting on the seat tube 120b is 4 (kgf) to 10 (kgf).

In short, from a comparison between the curve C3 and the curve C4, it may be seen that during the press-down process, a force acting on the seat tube 120b is increased from 4 (kgf) to 9 (kgf) to 4 (kgf) to 10 (kgf). This indicates that a resistance during the descending process of the seat tube 120b gradually increases (a press-down resistance may be increased by 10% to 50% according to needs). When the seat tube 120b descends to a final stage (see FIGs. 4C to 4D, in a range in which the overlapping length between the seat tube 120 and the support tube 110 is 60 mm to 80 mm), a frictional force of the elastic ring 142b acting on the seat tube 120b significantly increases. Therefore, a deceleration effect is generated in a final stage of the press-down process of the seat tube 120b, instead of being generated in an initial stage of the press-down process of the seat tube 120b. This approach allows the seat tube 120b to decelerate significantly only after descending more than 60 mm, which may improve a smoothness of pressing down of the telescopic seatpost 100B and avoid an excessively long switching time from the extension mode to the compression mode.

Referring to FIG. 5 and FIGs. 4B to 4D together, the curve C3 is a force variation diagram of the telescopic seatpost 100B without the deceleration module 140b. During a process in which the telescopic seatpost 100B is switched from the compression mode (see FIG. 4D) to the extension mode (see FIG. 4B), a push-back force on the seat tube 120b is about 6.5 (kgf) to 0 (kgf). The curve C4 is a force variation diagram of the telescopic seatpost 100B with the deceleration module 140b. During a process in which the telescopic seatpost 100B is switched from the compression mode (see FIG. 4D) to the extension mode (see FIG. 4B), multiple gaps GP of the elastic member 150b gradually increase, such that an overlapping area between the elastic member 150b and the bushing 141b and the elastic ring 142b gradually decreases. Since an area by which the elastic member 150b directly presses down the elastic ring 142b becomes smaller, an interference degree between the elastic ring 142b and the seat tube 120b gradually decreases. Therefore, a push-back force on the seat tube 120b is 5 (kgf) to 0 (kgf).

In short, from a comparison between the curve C3 and the curve C4, it may be seen that during the push-back process of the seat tube 120b, a force acting on the seat tube 120b is reduced from 6.5 (kgf) to 0 (kgf) to 5 (kgf) to 0 (kgf). This indicates that a resistance during the ascending process of the seat tube 120b gradually increases (an ascending resistance may be increased by 10% to 50% according to needs). In an initial stage of the ascent of the seat tube 120b (see FIGs. 4D to 4C, in a range in which the overlapping length between the seat tube 120 and the support tube 110 is 80 mm to 60 mm), a frictional force of the elastic ring 142b acting on the seat tube 120b still exists. That is, an elastic force of the elastic member 150b has to overcome the frictional force of the elastic ring 142b to push back the seat tube 120b. Therefore, in the initial stage of the ascent of the seat tube 120b, a deceleration effect is still provided.

Referring to FIG. 5 and FIG. 4E, in a later stage of the ascent of the seat tube 120b (in a range in which the overlapping length between the seat tube 120 and the support tube 110 is 60 mm to 0 mm), the gaps GP of the elastic member 150b increase, such that an area directly pressing down the elastic ring 142b is significantly decreased. Therefore, a deformation amount of the elastic ring 142b partially enters multiple through holes TH of the bushing 141b. As a result, a frictional force of the elastic ring 142b acting on the seat tube 120b has significantly decreased, and thus a deceleration effect of the seat tube 120b in the later stage of the ascent becomes smaller.

In the method of this embodiment, a deceleration effect after the seat tube 120b is pushed back to less than 60 mm is significantly reduced, so as to improve a smoothness of pushing back of the telescopic seatpost 100B and avoid an excessively long switching time from the compression mode to the extension mode.

In addition, in this embodiment, an increased press-down resistance and a reduced rebound force respectively achieve a deceleration effect during two switching processes of pressing down and pushing back. An increased force is controlled by a degree of interference between the elastic ring 142b and the seat tube 120b. A higher interference degree means a slower descending and push-back speed. A lower interference degree means a smaller deceleration effect in descending and pushing back.

In summary, the telescopic seatpost of the disclosure combines the deceleration module and the elastic member. When the telescopic seatpost is switched to the compression mode or the extension mode, a damping effect is provided to reduce a lifting and lowering speed.

Furthermore, during a process in which the telescopic seatpost is switched to the compression mode, the seat tube and the deceleration module interfere with each other to increase a press-down resistance, so as to reduce a descending speed of the seat tube. Compared with conventional mechanical telescopic seatposts, a riding experience of rapid sliding and stalling may be improved. During a process in which the telescopic seatpost is switched to the extension mode, the seat tube and the deceleration module interfere with each other to increase a push-back resistance, so as to reduce an ascending speed of the seat tube and avoid a collision with a user caused by an excessively high push-back speed.

## Claims

1. A telescopic seatpost (100, 100A, 100B) for a bicycle, comprising:
a support tube (110, 110b);
a seat tube (120, 120a, 120b), slidably disposed in the support tube (110, 110b);
a connecting seat (130, 130a, 130b), connected to an end of the seat tube (120, 120a, 120b) away from the support tube (110, 110b);
a deceleration module (140, 140a, 140b), connected to the support tube (110, 110b) and sleeved on the seat tube (120, 120a, 120b);
an elastic member (150, 150a, 150b), disposed on the connecting seat (130, 130a, 130b) and the deceleration module (140, 140a, 140b) and spaced apart from the seat tube (120, 120a, 120b), wherein a part of the elastic member (150, 150a, 150b) presses down the deceleration module (140, 140a, 140b) along a normal direction (ND);
a first outer tube (170), connected to the support tube (110, 110b) and surrounding the support tube (110, 110b), wherein the first outer tube (170) has a mounting seat (171) located at an end away from the connecting seat (130, 130a, 130b); and
a second outer tube (180), connected to the connecting seat (130, 130a, 130b) and accommodating the seat tube (120, 120a, 120b),
wherein when the seat tube (120, 120a, 120b) slides relative to the support tube (110, 110b) along a first direction (D1) to switch to a compression mode, the connecting seat (130, 130a, 130b) compresses the elastic member (150, 150a, 150b), and when the seat tube (120, 120a, 120b) slides relative to the support tube (110, 110b) along a second direction (D2) opposite to the first direction (D1) to switch to an extension mode, the elastic member (150, 150a, 150b) elastically recovers to push the connecting seat (130, 130a, 130b),
**characterized in that**
the deceleration module (140, 140a, 140b) has a bushing (141, 141a, 141b) and an elastic ring (142, 142a, 142b), the bushing (141, 141a, 141b) is fixed to the support tube (110, 110b) and has an accommodating space (AS), and the elastic ring (142, 142a, 142b) is disposed in the accommodating space (AS) and in surface contact with the seat tube (120, 120a, 120b) to continuously provide a frictional force to the seat tube (120, 120a, 120b).

2. The telescopic seatpost (100, 100A, 100B) according to claim 1, wherein during a switching process between the extension mode and the compression mode, an overlapping area between the elastic member (150, 150a, 150b) and the bushing (141, 141a, 141b) is changed continuously.

3. The telescopic seatpost (100, 100A, 100B) according to claim 1, wherein during a process of switching from the extension mode to the compression mode, a plurality of gaps (GP) of the elastic member (150, 150a, 150b) gradually decrease such that an overlapping area between the elastic member (150, 150a, 150b) and the bushing (141, 141a, 141b) gradually increases, and during a process of switching from the compression mode to the extension mode, a plurality of gaps (GP) of the elastic member (150, 150a, 150b) gradually increase such that the overlapping area between the elastic member (150, 150a, 150b) and the bushing (141, 141a, 141b) gradually decreases.

4. The telescopic seatpost (100, 100A, 100B) according to claim 2, wherein the bushing (141, 141a, 141b) completely seals the elastic ring (142, 142a, 142b), and the elastic member (150, 150a, 150b) presses down the bushing (141, 141a, 141b).

5. The telescopic seatpost (100, 100A, 100B) according to claim 3, wherein the bushing (141, 141a, 141b) completely seals the elastic ring (142, 142a, 142b), and the elastic member (150, 150a, 150b) presses down the bushing (141, 141a, 141b).

6. The telescopic seatpost (100A, 100B) according to claim 2, wherein the bushing (141a, 141b) has an opening (S) on a side toward the connecting seat (130a, 130b), the opening (S) communicates with the accommodating space (AS), the bushing (141a, 141b) partially exposes the elastic ring (142a, 142b), and the elastic member (150a, 150b) presses down the bushing (141a, 141b).

7. The telescopic seatpost (100A, 100B) according to claim 3, wherein the bushing (141a, 141b) has an opening (S) on a side toward the connecting seat (130a, 130b), the opening (S) communicates with the accommodating space (AS), the bushing (141a, 141b) partially exposes the elastic ring (142a, 142b), and the elastic member (150a, 150b) presses down the bushing (141a, 141b).

8. The telescopic seatpost (100B) according to claim 1, wherein the bushing (141b) has an opening (S) on a side toward the connecting seat (130b) and has a plurality of through holes (TH) extending along the normal direction (ND), a part of the elastic ring (142b) is located in the plurality of through holes (TH) and flush with an outer surface (OS) of the bushing (141b), and the elastic member (150b) presses down the bushing (141b) and the elastic ring (142b).

9. The telescopic seatpost (100B) according to claim 8, wherein during a process of switching from the extension mode to the compression mode, a plurality of gaps (GP) of the elastic member (150b) taper such that an overlapping area between the elastic member (150b), the bushing (141b) and the elastic ring (142b) gradually increases, and an interference degree between the elastic ring (142b) and the seat tube (120b) gradually increases.

10. The telescopic seatpost (100B) according to claim 8, wherein during a process of switching from the compression mode to the extension mode, a plurality of gaps (GP) of the elastic member (150b) gradually increase such that an overlapping area between the elastic member (150b), the bushing (141b) and the elastic ring (142b) gradually decreases, and an interference degree between the elastic ring (142b) and the seat tube (120b) gradually decreases.

11. The telescopic seatpost (100, 100A, 100B) according to claim 1, wherein the elastic member (150, 150a, 150b) is sleeved on the connecting seat (130, 130a, 130b).

12. The telescopic seatpost (100, 100A, 100B) according to claim 1, further comprising an engaging module (160), connected to another end of the seat tube (120, 120a, 120b) and located in the support tube (110, 110b), wherein the engaging module (160) is adapted to be fastened with the support tube (110, 110b) to switch to the extension mode or the compression mode.

13. The telescopic seatpost (100, 100A, 100B) according to claim 12, wherein the engaging module (160) has a sliding seat (161), a plurality of balls (162), and a top block (163), the sliding seat (161) is fixed to the other end of the seat tube (120, 120a, 120b), the plurality of balls (162) are movably disposed in a plurality of holes of the sliding seat (161), and the top block (163) is disposed on the sliding seat (161) and abuts the plurality of balls (162) to engage with a plurality of grooves (111) of the support tube (110, 110b) respectively.

## Patentansprüche

1. Teleskopsattelstütze (100, 100A, 100B) für ein Fahrrad, umfassend:
ein Stützrohr (110, 110b);
ein Sattelrohr (120, 120a, 120b), das verschiebbar in dem Stützrohr (110, 110b) angeordnet ist;
einen Verbindungssitz (130, 130a, 130b), der mit einem von dem Stützrohr (110, 110b) abgewandten Ende des Sattelrohrs (120, 120a, 120b) verbunden ist;
ein Verzögerungsmodul (140, 140a, 140b), das mit dem Stützrohr (110, 110b) verbunden ist und auf das Sattelrohr (120, 120a, 120b) aufgeschoben ist;
ein elastisches Element (150, 150a, 150b), das auf dem Verbindungssitz (130, 130a, 130b) und dem Verzögerungsmodul (140, 140a, 140b) angeordnet ist und von dem Sattelrohr (120, 120a, 120b) beabstandet ist, wobei ein Teil des elastischen Elements (150, 150a, 150b) das Verzögerungsmodul (140, 140a, 140b) entlang einer Normalenrichtung (ND) nach unten drückt;
ein erstes Außenrohr (170), das mit dem Stützrohr (110, 110b) verbunden ist und das Stützrohr (110, 110b) umgibt, wobei das erste Außenrohr (170) einen Montagesitz (171) aufweist, der an einem von dem Verbindungssitz (130, 130a, 130b) abgewandten Ende angeordnet ist; und
ein zweites Außenrohr (180), das mit dem Verbindungssitz (130, 130a, 130b) verbunden ist und das Sattelrohr (120, 120a, 120b) aufnimmt,
wobei, wenn das Sattelrohr (120, 120a, 120b) relativ zu dem Stützrohr (110, 110b) entlang einer ersten Richtung (D1) gleitet, um in einen Kompressionsmodus zu wechseln, der Verbindungssitz (130, 130a, 130b) das elastische Element (150, 150a, 150b) komprimiert, und wenn das Sattelrohr (120, 120a, 120b) relativ zu dem Stützrohr (110, 110b) entlang einer zweiten Richtung (D2) entgegengesetzt zu der ersten Richtung (D1) gleitet, um in einen Ausfahrmodus zu wechseln, kehrt das elastische Element (150, 150a, 150b) elastisch zurück, um den Verbindungssitz (130, 130a, 130b) zu drücken,
**dadurch gekennzeichnet, dass**
das Verzögerungsmodul (140, 140a, 140b) eine Buchse (141, 141a, 141b) und einen elastischen Ring (142, 142a, 142b) aufweist, wobei die Buchse (141, 141a, 141b) an dem Stützrohr (110, 110b) befestigt ist und einen Aufnahmeraum (AS) aufweist, und der elastische Ring (142, 142a, 142b) in dem Aufnahmeraum (AS) angeordnet ist und in Flächenkontakt mit dem Sattelrohr (120, 120a, 120b) steht, um kontinuierlich eine Reibkraft auf das Sattelrohr (120, 120a, 120b) bereitzustellen.

2. Teleskopsattelstütze (100, 100A, 100B) nach Anspruch 1, wobei während eines Umschaltprozesses zwischen dem Ausfahrmodus und dem Kompressionsmodus ein Überlappungsbereich zwischen dem elastischen Element (150, 150a, 150b) und der Buchse (141, 141a, 141b) kontinuierlich verändert wird.

3. Teleskopsattelstütze (100, 100A, 100B) nach Anspruch 1, wobei während eines Umschaltprozesses von dem Ausfahrmodus in den Kompressionsmodus eine Vielzahl von Spalten (GP) des elastischen Elements (150, 150a, 150b) allmählich abnimmt, so dass ein Überlappungsbereich zwischen dem elastischen Element (150, 150a, 150b) und der Buchse (141, 141a, 141b) allmählich zunimmt, und während eines Prozesses des Umschaltens von dem Kompressionsmodus in den Ausfahrmodus eine Vielzahl von Spalten (GP) des elastischen Elements (150, 150a, 150b) allmählich zunimmt, so dass der Überlappungsbereich zwischen dem elastischen Element (150, 150a, 150b) und der Buchse (141, 141a, 141b) allmählich abnimmt.

4. Teleskopsattelstütze (100, 100A, 100B) nach Anspruch 2, wobei die Buchse (141, 141a, 141b) den elastischen Ring (142, 142a, 142b) vollständig abdichtet und das elastische Element (150, 150a, 150b) die Buchse (141, 141a, 141b) nach unten drückt.

5. Teleskopsattelstütze (100, 100A, 100B) nach Anspruch 3, wobei die Buchse (141, 141a, 141b) den elastischen Ring (142, 142a, 142b) vollständig abdichtet und das elastische Element (150, 150a, 150b) die Buchse (141, 141a, 141b) nach unten drückt.

6. Teleskopsattelstütze (100A, 100B) nach Anspruch 2, wobei die Buchse (141a, 141b) eine Öffnung (S) auf einer dem Verbindungssitz (130a, 130b) zugewandten Seite aufweist, wobei die Öffnung (S) mit dem Aufnahmeraum (AS) in Verbindung steht, die Buchse (141a, 141b) den elastischen Ring (142a, 142b) teilweise freilegt und das elastische Element (150a, 150b) die Buchse (141a, 141b) nach unten drückt.

7. Teleskopsattelstütze (100A, 100B) nach Anspruch 3, wobei die Buchse (141a, 141b) eine Öffnung (S) auf einer dem Verbindungssitz (130a, 130b) zugewandten Seite aufweist, die Öffnung (S) mit dem Aufnahmeraum (AS) in Verbindung steht, die Buchse (141a, 141b) den elastischen Ring (142a, 142b) teilweise freilegt und das elastische Element (150a, 150b) die Buchse (141a, 141b) nach unten drückt.

8. Teleskopsattelstütze (100B) nach Anspruch 1, wobei die Buchse (141b) eine Öffnung (S) auf einer dem Verbindungssitz (130b) zugewandten Seite aufweist und eine Vielzahl von Durchgangslöchern (TH) aufweist, die sich entlang der Normalenrichtung (ND) erstrecken, ein Teil des elastischen Rings (142b) in der Vielzahl von Durchgangslöchern (TH) angeordnet ist und bündig mit einer Außenfläche (OS) der Buchse (141b) abschließt, und das elastische Element (150b) die Buchse (141b) und den elastischen Ring (142b) nach unten drückt.

9. Teleskopsattelstütze (100B) nach Anspruch 8, wobei sich während eines Prozesses des Wechsels von dem Ausfahrmodus in den Kompressionsmodus eine Vielzahl von Spalten (GP) des elastischen Elements (150b) so verjüngen, dass ein Überlappungsbereich zwischen dem elastischen Element (150b), der Buchse (141b) und dem elastischen Ring (142b) allmählich zunimmt und ein Übermaßgrad zwischen dem elastischen Ring (142b) und dem Sattelrohr (120b) allmählich zunimmt.

10. Teleskopsattelstütze (100B) nach Anspruch 8, wobei während eines Vorgangs des Umschaltens von dem Kompressionsmodus in den Ausfahrmodus eine Vielzahl von Spalten (GP) des elastischen Elements (150b) allmählich zunimmt, so dass ein Überlappungsbereich zwischen dem elastischen Element (150b), der Buchse (141b) und dem elastischen Ring (142b) allmählich abnimmt und ein Übermaßgrad zwischen dem elastischen Ring (142b) und dem Sattelrohr (120b) allmählich abnimmt.

11. Teleskopsattelstütze (100, 100A, 100B) nach Anspruch 1, wobei das elastische Element (150, 150a, 150b) auf den Verbindungssitz (130, 130a, 130b) aufgeschoben ist.

12. Teleskopsattelstütze (100, 100A, 100B) nach Anspruch 1, ferner umfassend ein Eingriffsmodul (160), das mit einem anderen Ende des Sattelrohrs (120, 120a, 120b) verbunden ist und in dem Stützrohr (110, 110b) angeordnet ist, wobei das Eingriffsmodul (160) dazu eingerichtet ist, mit dem Stützrohr (110, 110b) verriegelt zu werden, um in den Ausfahrmodus oder den Kompressionsmodus zu wechseln.

13. Teleskopsattelstütze (100, 100A, 100B) nach Anspruch 12, wobei das Eingriffsmodul (160) einen Gleitsitz (161), eine Vielzahl von Kugeln (162) und einen oberen Block (163) aufweist, wobei der Gleitsitz (161) an dem anderen Ende des Sattelrohrs (120, 120a, 120b) befestigt ist, die Vielzahl von Kugeln (162) beweglich in einer Vielzahl von Löchern des Gleitsitzes (161) angeordnet ist und der obere Block (163) auf dem Gleitsitz (161) angeordnet ist und an der Vielzahl von Kugeln (162) anliegt, um jeweils in eine Vielzahl von Nuten (111) des Stützrohrs (110, 110b) einzugreifen.

## Revendications

1. Tige de selle télescopique (100, 100A, 100B) pour bicyclette, comprenant :
un tube de support (110, 110b) ;
un tube de selle (120, 120a, 120b), monté de manière coulissante dans le tube de support (110, 110b) ;
un siège de raccordement (130, 130a, 130b), relié à une extrémité du tube de selle (120, 120a, 120b) opposée au tube de support (110, 110b);
un module de décélération (140, 140a, 140b), relié au tube de support (110, 110b) et emboîté sur le tube de siège (120, 120a, 120b) ;
un élément élastique (150, 150a, 150b), disposé sur le siège de raccordement (130, 130a, 130b) et le module de décélération (140, 140a, 140b) et espacé du tube de selle (120, 120a, 120b), dans lequel une partie de l'élément élastique (150, 150a, 150b) appuie sur le module de décélération (140, 140a, 140b) selon une direction normale (ND) ;
un premier tube extérieur (170), relié au tube de support (110, 110b) et entourant le tube de support (110, 110b), dans lequel le premier tube extérieur (170) comporte un siège de montage (171) situé à une extrémité éloignée du siège de raccordement (130, 130a, 130b) ; et
un deuxième tube extérieur (180), relié au siège de raccordement (130, 130a, 130b) et logeant le tube de selle (120, 120a, 120b),
dans lequel, lorsque le tube de siège (120, 120a, 120b) coulisse par rapport au tube de support (110, 110b) selon une première direction (D1) pour passer en mode de compression, le siège de raccordement (130, 130a, 130b) comprime l'élément élastique (150, 150a, 150b), et lorsque le tube de selle (120, 120a, 120b) coulisse par rapport au tube de support (110, 110b) dans une deuxième direction (D2) opposée à la première direction (D1) pour passer en mode d'extension, l'élément élastique (150, 150a, 150b) se rétracte élastiquement pour pousser le siège de raccordement (130, 130a, 130b),
**caractérisé en ce que**
le module de décélération (140, 140a, 140b) comporte une douille (141, 141a, 141b) et une bague élastique (142, 142a, 142b), la douille (141, 141a, 141b) est fixée au tube de support (110, 110b) et comporte un espace de logement (AS), et la bague élastique (142, 142a, 142b) est disposée dans l'espace de logement (AS) et en contact de surface avec le tube de selle (120, 120a, 120b) afin de fournir en continu une force de frottement au tube de selle (120, 120a, 120b).

2. Tige de selle télescopique (100, 100A, 100B) selon la revendication 1, dans laquelle, au cours d'un processus de commutation entre le mode d'extension et le mode de compression, une zone de chevauchement entre l'élément élastique (150, 150a, 150b) et la douille (141, 141a, 141b) est modifiée en continu.

3. Tige de selle télescopique (100, 100A, 100B) selon la revendication 1, dans laquelle, au cours d'un processus de passage du mode d'extension au mode de compression, une pluralité d'espaces (GP) de l'élément élastique (150, 150a, 150b) diminuent progressivement de telle sorte qu'une zone de chevauchement entre l'élément élastique (150, 150a, 150b) et la douille (141, 141a, 141b) augmente progressivement, et pendant un processus de passage du mode de compression au mode d'extension, une pluralité d'espaces (GP) de l'élément élastique (150, 150a, 150b) augmente progressivement de telle sorte que la zone de chevauchement entre l'élément élastique (150, 150a, 150b) et la douille (141, 141a, 141b) diminue progressivement.

4. Tige de selle télescopique (100, 100A, 100B) selon la revendication 2, dans laquelle la douille (141, 141a, 141b) scelle complètement la bague élastique (142, 142a, 142b), et l'élément élastique (150, 150a, 150b) appuie sur la douille (141, 141a, 141b).

5. Tige de selle télescopique (100, 100A, 100B) selon la revendication 3, dans laquelle la douille (141, 141a, 141b) scelle complètement la bague élastique (142, 142a, 142b), et l'élément élastique (150, 150a, 150b) appuie sur la douille (141, 141a, 141b).

6. Tige de selle télescopique (100A, 100B) selon la revendication 2, dans laquelle la douille (141a, 141b) comporte une ouverture (S) sur un côté tourné vers le siège de raccordement (130a, 130b), l'ouverture (S) communique avec l'espace de logement (AS), la douille (141a, 141b) expose partiellement la bague élastique (142a, 142b), et l'élément élastique (150a, 150b) appuie sur la douille (141a, 141b).

7. Tige de selle télescopique (100A, 100B) selon la revendication 3, dans laquelle la douille (141a, 141b) comporte une ouverture (S) sur un côté tourné vers le siège de raccordement (130a, 130b), l'ouverture (S) communique avec l'espace de logement (AS), la douille (141a, 141b) expose partiellement la bague élastique (142a, 142b), et l'élément élastique (150a, 150b) appuie sur la douille (141a, 141b).

8. Tige de selle télescopique (100B) selon la revendication 1, dans laquelle la douille (141b) comporte une ouverture (S) sur un côté tourné vers le siège de raccordement (130b) et comporte une pluralité de trous traversants (TH) s'étendant le long de la direction normale (ND), une partie de la bague élastique (142b) est située dans la pluralité de trous traversants (TH) et affleure une surface extérieure (OS) de la douille (141b), et l'élément élastique (150b) appuie sur la douille (141b) et la bague élastique (142b).

9. Tige de selle télescopique (100B) selon la revendication 8, dans laquelle, au cours d'un processus de passage du mode d'extension au mode de compression, une pluralité d'espaces (GP) de l'élément élastique (150b) se rétrécissent de telle sorte qu'une zone de chevauchement entre l'élément élastique (150b), la douille (141b) et la bague élastique (142b) augmente progressivement, et le degré d'interférence entre la bague élastique (142b) et le tube de selle (120b) augmente progressivement.

10. Tige de selle télescopique (100B) selon la revendication 8, dans laquelle, lors d'un processus de passage du mode de compression au mode d'extension, une pluralité d'espaces (GP) de l'élément élastique (150b) augmentent progressivement de telle sorte qu'une zone de chevauchement entre l'élément élastique (150b), la douille (141b) et la bague élastique (142b) diminue progressivement, et le degré d'interférence entre la bague élastique (142b) et le tube de selle (120b) diminue progressivement.

11. Tige de selle télescopique (100, 100A, 100B) selon la revendication 1, dans laquelle l'élément élastique (150, 150a, 150b) est emmanché sur le siège de raccordement (130, 130a, 130b).

12. Tige de selle télescopique (100, 100A, 100B) selon la revendication 1, comprenant en outre un module d'engagement (160), relié à une autre extrémité du tube de selle (120, 120a, 120b) et situé dans le tube de support (110, 110b), dans lequel le module d'engagement (160) est adapté pour être fixé au tube de support (110, 110b) afin de passer en mode d'extension ou en mode de compression.

13. Tige de selle télescopique (100, 100A, 100B) selon la revendication 12, dans laquelle le module d'engagement (160) comporte un siège coulissant (161), une pluralité de billes (162) et un bloc supérieur (163), le siège coulissant (161) est fixé à l'autre extrémité du tube de selle (120, 120a, 120b), la pluralité de billes (162) est disposée de manière mobile dans une pluralité de trous du siège coulissant (161), et le bloc supérieur (163) est disposé sur le siège coulissant (161) et vient en butée contre la pluralité de billes (162) pour s'engager respectivement dans une pluralité de rainures (111) du tube de support (110, 110b).
